# EUROPEAN PATENT SPECIFICATION

(11) **EP 0 877 859 B1**
(45) Date of publication and mention of the grant of the patent: **22.03.2000**
(21) Application number: 97901712.6
(22) Date of filing: 31.01.1997
(51) Int. Cl.: F02D 33/02, F02D 41/18, F02D 41/04

(54) **FUEL METERING SYSTEM FOR AN INTERNAL COMBUSTION ENGINE**
KRAFTSTOFFZUMESSSYSTEM FÜR EINE BRENNKRAFTMASCHINE
SYSTEME DE DOSAGE DE CARBURANT POUR MOTEUR A COMBUSTION INTERNE

(30) Priority: 01.02.1996 GB 9602008
(43) Date of publication of application: 18.11.1998
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE SOCIETE ANONYME, 92506 Rueil Malmaison Cedex (FR)
(72) Inventor: MA, Thomas Tsoi-Hei, South Woodham Ferrers, Essex CM3 5YB (GB)
(74) Representative: Messulam, Alec Moses
(86) International application number: GB9700254
(87) International publication number: WO9728364

(56) References cited:
- EP-A- 0 330 233
- GB-A- 2 167 127
- GB-A- 2 219 344
- US-A- 4 182 295

## Description

### Field of the invention

The present invention relates to a fuel metering system for a spark ignition fuel injected internal combustion engine.

### Background of the invention

US-A-4,182,295 which is believed to represent the closest prior art to the present invention discloses a fuel metering system for a spark ignition fuel injected internal combustion engine comprising a first air supply duct containing a first throttle connected to a demand pedal, a bypass duct arranged in parallel with the first air supply duct and containing a second throttle, the two throttles having similar geometries and the second throttle being connected to the first throttle by a position follower mechanism, a mass air flow meter, processing means for processing the output signal of the mass air flow meter to compute the total mass air flow through both air supply ducts, and fuel metering means for metering to the engine a quantity of fuel based on the computed total mass air flow.

In the above patent, the position follower acts to vary the relative positions of the two throttles, and to change the ratio of the air mass flowing throwing through the first air supply duct relative to the air mass flowing through the bypass duct in dependence upon the engine operating conditions, the stated aim of the invention being to reduce torque fluctuations when the engine is operating in a lean burn mode. The present invention on the other hand is concerned with the different problem of controlling the fuelling during transients.

When determining the quantity of fuel to be injected into an intake port of an internal combustion engine during steady state operation of the engine, it is necessary to take into consideration only the mass air flow and the desired air to fuel ratio. However, achieving a desired air to fuel ratio at all times during so-called transients, that is to say when the driver changes the position of the demand pedal, is more difficult because of the need to take into account the changing equilibrium conditions within the intake manifold and the intake ports. In particular, the changing throttle position affects the manifold pressure which means that the air mass stored within the manifold changes. The mass air flow at the throttle does not therefore accurately match the instantaneous mass air flow entering the cylinders. Furthermore, there is a fuel mass stored on the walls of the intake ports which grows and diminishes when the throttle position is changed, with the result that the quantity fuel injected into the ports does not accurately match the fuel quantity reaching the cylinders.

For the above reasons, during transients, the air to fuel ratio undergoes major disturbances which if not compensated can cause engine misfire if the mixture is too lean and undesirable emissions of hydrocarbons and carbon monoxide if the mixture is too rich. If the engine is operated near its lean burn limit, then the danger of misfire is even greater and should misfire occur, the full charge would be released unburnt into the exhaust system and burnt in the catalytic converter with possible damage to the latter through overheating.

It is already known to compensate for some of the above disturbances when determining the fuel quantity injected into the intake ports. For example, when the throttle is opened abruptly, extra fuel has to be injected to balance the increase in the quantity of fuel stored in the intake port. When the throttle is closed abruptly, on the other hand, even if no fuel is injected, fuel will continue to reach the cylinders by evaporation from the stored fuel that has been lining the walls of the intake port. It is therefore not possible in a conventional system to avoid a rich mixture excursion when the throttle is abruptly closed.

A further difficulty arises on account of the various delays that occur between the different events in the metering cycle. When the throttle position is changed, there is a delay in the sensing of the change in the mass air flow by the air flow meter and a further delay in the processing of the data in the electronic control unit to determine the required change in the fuel flow. There is also a time delay imposed by the need to open the fuel injector only at certain times in the engine cycle. As a consequence, the fuel response will always lag the change in mass air flow and this hysteresis is responsible for excursions in the air to fuel ratio during the initial phase of all transients. Also, the ability of the algorithm used to compute the fuel quantity to compensate for the changing stored air and stored fuel equilibrium conditions in the intake manifold is impaired by the fact that algorithm is itself operating on data that is one or two engine cycles out of date.

The time delay hysteresis is also a problem in an in-cylinder injection spark ignition engine operating with a homogeneous charge where the engine load is varied by changing the intake air flow and the air to fuel ratio is set by calibration.

To avoid this fuel metering time delay hysteresis, what is required is a form of anticipative control that changes the fuel quantity in advance of throttle movement, based on the change in the air flow that is predicted to arrive at the same time as the fuel flow is changed.

Of course, one cannot predict when the driver of a vehicle will change the position of the demand pedal. To enable such anticipative control to be carried it is necessary to introduce a time delay between the demand pedal movement and the intake throttle movement such that subsequent events may be coordinated and synchronised. This can be achieved in a system using an electronically controlled throttle but the resultant complexity required in a drive-by-wire system makes such a solution too expensive in many situations.

### Summary of the invention

In accordance with the present invention, there is provided a fuel metering system for a spark ignition fuel injected internal combustion engine comprising a first air supply duct containing a mass air flow meter and a first throttle connected to a demand pedal, a second air supply duct arranged in parallel with the first air supply duct and containing a second throttle, the two throttles having similar geometries and the second throttle being connected to the first throttle by a position follower mechanism to follow the movements of the first throttle with a time delay, processing means for processing the output signal of the mass air flow meter in the first air supply duct to compute the total mass air flow through both air supply ducts, and fuel metering means for metering to the engine a quantity of fuel based on the computed total mass air flow.

Preferably, the fuel metering means are operative to compensate for changes in the stored fuel equilibrium in the intake port, and stored air equilibrium in the intake manifold.

In the invention, the first throttle passes only a proportion of the air required by the engine, but from this measured air flow, the total air flow through both throttles can be computed because the first and second throttles are ganged and have similar geometries. During transients, the two throttles will not be opened by equal amounts because of the time delay of the position follower. As a result the change in fuel flow determined by the air flow through the first throttle will effectively coincide with or even lead the change in the combined air flow to the engine, allowing the fuel metering system to reduce the hysteresis effect discussed above.

In practice, the fuel metering system does not fully counteract all the hysteresis because the air flow through the first throttle is not delayed. However, by suitable relative sizing of the two throttles it is possible to maintain the excursions in the actual air to fuel ratio reaching the engine combustion chambers within a small band in which misfire can safely be avoided. To this end, the second throttle should be at least as large as, if not larger than, the first throttle.

The position follower mechanism may suitably comprise two opposed weak springs acting to move the second throttle, and the movement of the second throttle is preferably damped. The damping may be inertial, frictional or pneumatic.

The time delay in the position follower can be calibrated to match a predetermined delay in the fuel metering system.

Typically, in the fuel metering system, between a first event of sensing a change in the air flow and a last event of executing a corresponding change in the fuel flow, there is a cumulative time delay of one or two engine cycles, resulting in the metered fuel being calculated based on old information which is always one or two cycles out of date. If a transient event is abrupt, the change in air flow during this fuel time delay period could be substantial and could cause a significant mismatch between the fuel and the air quantities that are being inducted simultaneously into the engine cylinder.

In the invention, the problem caused by the fuel time delay is mitigated by introducing a calibrated throttle time delay. The duration of the fuel time delay initiated by a change in the first air flow is variable depending on the engine speed and on the instant of start of a transient event relative to the engine cycle. The duration of the throttle time delay introduced by the position follower moving the second throttle is also variable depending on the travel and the rate of change of the first throttle. The calibration of the position follower therefore is such that under moderate transient conditions, the throttle time delay is substantially the same as the fuel time delay, both time delays being initiated by the movement of the first throttle.

With this calibration, under less moderate transient conditions, the throttle time delay will always exceed the fuel time delay, thus creating a condition in which the fuel leads the air and allowing time for the fuel quantity to be further corrected if necessary, in anticipation of any change in the air flow.

To this end, fine-tuning of the fuel flow may be accurately achieved by making use of additional sensors to detect the instant of start of a transient relative to the engine cycle, the position of the first throttle and the relative positions of first and second throttles. With such additional information, it is possible to determine the durations of both the fuel time delay and the throttle time delay and use the data to calculate the fuel quantity to be injected, taking into account the stored fuel and the stored air equilibrium conditions within the engine, and taking into account the anticipated air flow that is expected to occur at the time when that fuel quantity is being injected.

It should be mentioned that the present invention differs from known systems where a throttle damper has been used to slow down the movement of the main throttle of an engine. In these systems, because there is only one throttle, there is very little time delay between the throttle movement and actual induction of the air flow into the engine. The throttle damper merely slows down the rate of change in order to render the fuel metering delay effect less problematic. This is however not acceptable as such heavy damping would impair the responsiveness of the vehicle, which is objectionable to the driver.

In the preferred embodiment of the invention, on the other hand, the position follower applies only a small damping to the second throttle which is just sufficient to introduce a time delay of about 50 ms between movement of the first throttle and air induction through the second throttle. This time delay will counteract the fuel metering delay without perceptibly slowing down the rate of change demanded by the driver. Thus good performance feel for the vehicle is maintained while undesirable excursions in the fuel calibration are avoided.

### Brief description of the drawings

The invention will now be described further, by way of example, with reference to the accompanying drawings, in which :-
Figure 1 is a schematic diagram of an engine fitted with an intake system embodying a fuel metering system of the invention,
Figure 2a shows the air and fuel reaching the cylinders of a conventional engine during a sudden depression, or tip-in, of the demand pedal,
Figure 2b is similar to Figure 2a and shows the air and fuel reaching the cylinders of an engine fitted with a fuel metering system of the invention, and
Figures 3a and 3b are similar to Figures 2a and 2b but show the changes in air and fuel reaching the cylinders during a tip-out for a conventional engine and an engine fitted with a fuel metering system of the invention, respectively.

### Detailed description of the preferred embodiment

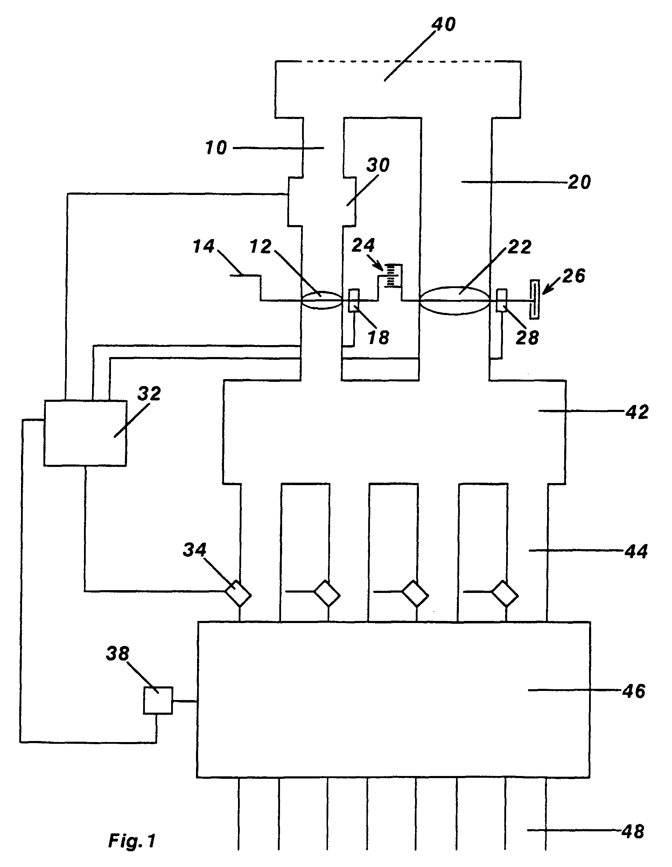

Figure 1 shows an engine 46 having four cylinders. Fuel and air are supplied to the cylinders through an intake manifold having a plenum 42 and individual branches 44 fitted with individual fuel injectors 34 that spray fuel into the intake ports. Exhaust gases are discharge through the branches 48 of an exhaust manifold.

Intake air drawn in through an air filter 40 flows via two separate air supply ducts 10 and 20 to the plenum 42. The first air supply duct 10 contains a mass air flow meter 30 which is followed by a first butterfly throttle 12 that is connected directly to a demand pedal 14. The second air supply duct 20 contains a second butterfly throttle 22 that is fitted with a damper 26 and is coupled for movement with the first butterfly throttle 12 by a position follower 24. The position follower 24 is shown as comprising two weak springs and its effect combined with the effect of the damper 26, which may suitably be a pneumatic damper, is to cause the second butterfly throttle 22 to follow the movement of the first butterfly throttle 12 but with a time delay.

The quantity of fuel injected during each engine cycle is determined by an electronic control unit 32 that receives inputs from various sensors and supplies outputs for operating the fuel injectors 34. The control unit 32 receives a first input from the mass air flow meter 30, two inputs from throttle angle sensors 18 and 28 associated with the first and second throttles 12 and 22 respectively, and a further sensor 28 which is a shaft encoder mounted on the camshaft of the engine.

The control unit 32 can compute from the mass air flow through the first throttle 12 and the position of the two throttles 12 and 22 the instantaneous mass air flow reaching the plenum 42. From this it can predict the total air flow reaching the cylinders after a certain time delay and can vary the opening times of the fuel injectors 34 to ensure that the correct air to fuel ratio is supplied to the individual cylinders at all times even during transients while taking into account the changing equilibrium conditions within the intake manifold, that is to say, the changes in the stored air in the manifold and the changes in the stored fuel lining the walls of the intake ports.

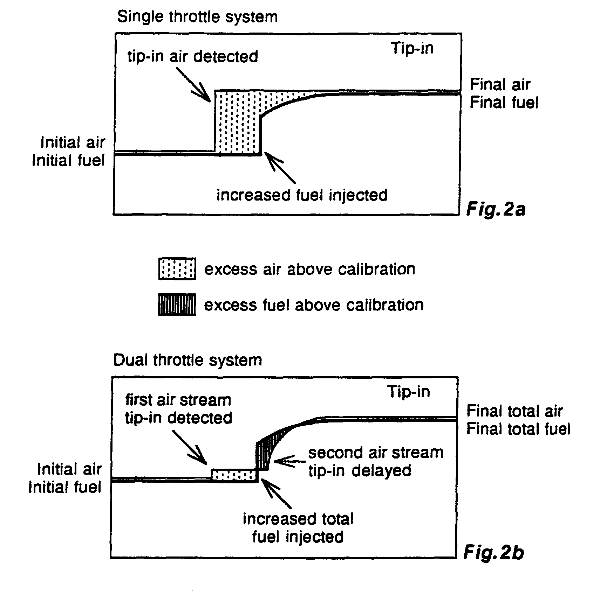

Figure 2a shows what occurs in a conventional engine with a single main throttle when the demand pedal is depressed suddenly. The increased air flow will reach the cylinder almost immediately but the control system will not respond until some time later to increase the fuel quantity injected. Furthermore even when the fuel quantity is increased to match the increased air flow, not all the additional fuel reaches the combustion chambers as some of it is used to create a larger stored mass of fuel lining the walls of the intake ports. The area that is dotted in Figure 2a therefore corresponds to a lean excursion that has a sudden onset and decays gradually as the new equilibrium is reached.

The effect of having two throttles 12 and 22 as shown in Figure 1 in which the second throttle 22 follows the movement of the first throttle 12 with a time delay is shown in Figure 2b for the same tip-in of the demand pedal. As in Figure 2a the air from the first throttle 12 will cause a immediate rise in the air reaching the combustion chambers, but the size of the step is now severely attenuated as only a fraction of the total air passes through the first supply duct 10. Figure 2b assumes that exactly the same fuel control is used as in Figure 2a and only the effect of the two throttles is illustrated. At some time after the fuel quantity has been increased to match the predicted air flow, the air flow through the second supply duct 20 reaches the cylinders and ramps up gently to its new steady state position on account of the damping. As a result there arises a lean excursion corresponding to the area that is dotted in Figure 2b and a rich excursion corresponding to the area that is shaded with vertical lines in Figure 2b. Both these excursions are of significantly smaller amplitude than the corresponding excursion in Figure 2a and further the rich excursion can be trimmed still further by modifying the fuel control algorithm to take into account the delay in the air from the second throttle 22 reaching the engine cylinders.

The phasing of the depression of the demand pedal with respect to the engine cycle is random whereas the fuel is injected at times that are synchronised with the engine cycle. The delay between depression of the demand pedal and the fuel injection reaching the combustion chamber is therefore variable and the purpose of the sensor 38 is to allow the electronic control unit 32 to compensate for this variable delay.

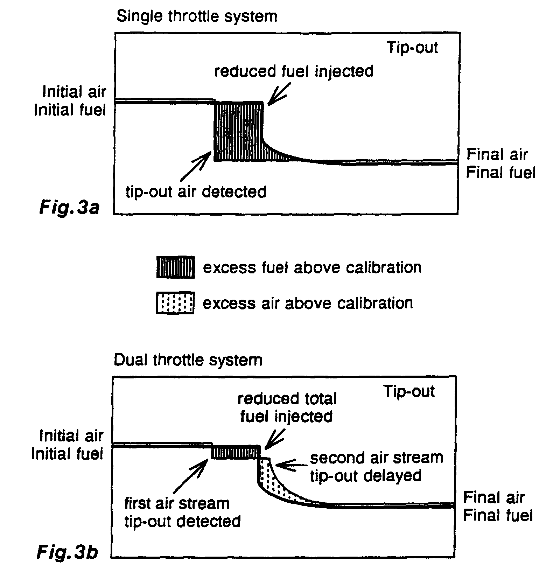

Figure 3a shows what occurs in a conventional engine when the demand pedal is released suddenly. The air flow to the cylinder stops suddenly but fuel continues to be supplied for a period because of the response time of the electronic control unit 32. When the control unit 32 eventually responds to cut-off the fuel injection, fuel continues to reach the combustion chambers by evaporation of the stored fuel that has been lining the walls of the intake ports under the effect of the increased manifold vacuum. This gives rise to the rich excursion corresponding to the shaded area in Figure 3a.

The effect of using two throttles 12 and 22 in accordance with the invention as shown in Figure 3b is to reduce the amplitude of the rich excursion and one may even introduce a lean excursion as shown by the dotted area by arranging for the reduction in the injected fuel quantity to precede the air arriving from the second supply duct 20.

## Claims

1. A fuel metering system for a spark ignition fuel injected internal combustion engine comprising a first air supply duct (10) containing a mass air flow meter (30) and a first throttle (12) connected to a demand pedal (14), a second air supply duct (20) arranged in parallel with the first air supply duct (10) and containing a second throttle (22), the two throttles (12,22) having similar geometries and the second throttle (22) being connected to the first throttle (12) by a position follower mechanism (24) to follow the movements of the first throttle (12) with a time delay, processing means (32) for processing the output signal of the mass air flow meter (30) in the first air supply duct (10) to compute the total mass air flow through both air supply ducts (10,20), and fuel metering means (34) for metering to the engine a quantity of fuel based on the computed total mass air flow.

2. A fuel metering system as claimed in claim 1, wherein the fuel metering means are operative to compensate for changes in the stored fuel equilibrium in the intake port, and stored air equilibrium in the intake manifold.

3. A fuel metering system as claimed in claim 1 or 2, wherein the fuel metering means are operative to compute the fuel quantity on the basis of the air flow expected to arrive at the cylinders at the instant when that computed fuel quantity is to be injected into the cylinders, the metering system comprising sensors to detect the instant of the start of a transient relative to the engine cycle, the position of the first throttle and the relative positions of the first and second throttles.

## Patentansprüche

1. Ein Kraftstoffdosiersystem für einen Fremdzündungs-Verbrennungsmotor mit Kraftstoffeinspritzung bestehend aus einem ersten Luftzufuhrrohr (10), das einen Massenluft-Durchflussmesser (30) und eine erste Drosselklappe (12) enthält, die mit einem Befehlspedal (14) verbunden ist, einem zweiten Luftzufuhrrohr (20), das parallel zum ersten Luftzufuhrrohr (10) angebracht ist und eine zweite Drosselklappe (22) enthält, wobei die beiden Drosselklappen (12, 22) ähnliche Geometrien haben und die zweite Drosselklappe (22) mit der ersten Drosselklappe (12) durch einen Stellungsfolgemechanismus (24) verbunden ist, um den Bewegungen der ersten Drosselklappe (12) mit einer Zeitverzögerung zu folgen, einer Vorrichtung (32) zur Erzeugung des Abgabesignals des Massenluft-Durchflussmessers (30) im ersten Luftzufuhrrohr (10), um den totalen Massenluftstrom durch beide Luftzufuhrrohre (10, 20) zu berechnen und einer Kraftstoffdosiervorrichtung (34), zum Dosieren einer Kraftstoffmenge für den Motor, die auf dem berechneten totalen Massenluftstrom basiert.

2. Ein Kraftstoffdosiersystem nach Anspruch 1, in dem die Kraftstoffdosiervorrichtung fungiert, um Veränderungen im Gleichgewicht des gestauten Kraftstoffs in der Einströmöffnung und das Gleichgewicht der gestauten Luft in der Einströmrohrleitung auszugleichen.

3. Ein Kraftstoffdosiersystem nach Anspruch 1 oder 2, in dem die Kraftstoffdosiervorrichtung fungiert, um die Kraftstoffmenge auf der Basis des Luftstroms zu berechnen, der vermutlich an den Zylindern an dem Zeitpunkt eintrifft, wenn diese berechnete Kraftstoffmenge in die Zylinder eingespritzt werden soll, wobei das Dosiersystem Aufnehmer enthält, um den Moment des Beginns eines Übergangs im Verhältnis zum Motorzyklus, die Stellung der ersten Drosselklappe und die relativen Stellungen der ersten und zweiten Drosselklappe aufzuspüren.

## Revendications

1. Système de mesure de carburant pour un moteur à combustion interne à injection de carburant et allumage par étincelle comprenant un premier conduit d'alimentation en air (10) contenant un compteur d'écoulement d'air massique (30) et un premier étrangleur (12) connecté à une pédale de demande (14), un second conduit d'alimentation en air (20) arrangé en parallèle avec le premier conduit d'alimentation en air (10) et contenant un second étrangleur (22), les deux étrangleurs (12, 22) présentant des géométries similaires et le second étrangleur (22) étant connecté au premier étrangleur (12) par un mécanisme de suiveur de position (24) pour suivre les mouvements du premier étrangleur (12) avec un temps de retard, des moyens de traitement (32) destinés à traiter le signal de sortie du compteur d'écoulement d'air massique (30) pour calculer l'écoulement d'air massique dans le premier conduit d'alimentation en air (10) pour calculer l'écoulement d'air massique total à travers les deux conduits d'alimentation en air (10, 20), et des moyens de mesure de carburant (34) destinés à mesurer au niveau du moteur une quantité de carburant basée sur l'écoulement d'air massique total calculé.

2. Système de mesure de carburant selon la revendication 1, dans lequel les moyens de mesure du carburant servent à compenser les changements dans l'équilibre de carburant stocké dans le conduit d'admission, et l'équilibre d'air stocké dans le collecteur d'admission.

3. Système de mesure de carburant selon la revendication 1 ou 2, dans lequel les moyens de mesure du carburant servent à calculer la quantité de carburant sur la base de l'écoulement d'air sensé arriver aux cylindres à l'instant où ladite quantité de carburant calculée doit être injectée dans les cylindres, le système de mesure comprenant des détecteurs destinés à détecter l'instant du démarrage d'un phénomène transitoire par rapport au cycle moteur, la position du premier étrangleur et les positions relatives des premier et second étrangleurs.
